# FASCICULE DE BREVET EUROPEEN

(11) **EP 0 569 275 B1**
(45) Date de publication et mention de la délivrance du brevet: **13.03.1996**
(21) Numéro de dépôt: 93401133.9
(22) Date de dépôt: 30.04.1993
(51) Int. Cl.: B60G 7/02, F16C 11/10

(54) **Articulation élastique à déplacement axial piloté et suspension équipé d'une telle articulation**
Elastisches Gelenk mit festgelegter Axialverschiebung und Radaufhängung mit einem solchen Gelenk
Resilient joint with axial displacement in a fixed manner and suspension with such a joint

(30) Priorité: 05.05.1992 FR 9205529
(43) Date de publication de la demande: 10.11.1993
(73) Titulaire: AUTOMOBILES PEUGEOT, F-75116 Paris (FR); AUTOMOBILES CITROEN, F-92200 Neuilly sur Seine (FR)
(72) Inventeur: Galtier, Lucien, F-91390 Morsang Sur Orge (FR); Barthelemy, André, F-78470 Saint Remy Les Chevreuse (FR)
(74) Mandataire: Durand, Yves Armand Louis

(56) Documents cités:
- EP-A- 0 147 662
- BE-A- 480 880
- DE-C- 960 963
- FR-A- 2 241 722
- US-A- 3 161 420
- US-A- 4 840 083
- US-A- 4 955 634

## Description

La présente invention se rapporte à une articulation à déplacement axial piloté, et à une suspension de véhicule automobile quelconque, équipée d'une telle articulation.

On connaît déjà (par exemple de US-A-3 161 420) diverses articulations aptes à relier un premier organe dit fixe à un second organe dit mobile, de façon que ce dernier puisse pivoter autour d'un axe donné, par rapport à l'organe fixe.

Cependant, il n'a pas été possible jusqu'à présent d'obtenir une articulation dont la structure est simple et qui permet un déplacement axial selon une loi prédéterminée de l'organe mobile, lorsque celui-ci effectue un mouvement autour de l'axe d'articulation et/ou perpendiculairement à ce dernier.

Aussi, la présente invention a pour but de proposer une articulation qui remédie aux inconvénients énoncés ci-dessus.

A cet effet, l'invention a notamment pour objet une articulation entre un premier organe dit fixe et un second organe mobile en rotation par rapport au premier organe autour d'un axe, comprenant les caractéristiques énoncées dans la revendication 1.

L'articulation est aussi caractérisée en ce que les moyens de déplacement sont agencés pour que le sens de déplacement précité corresponde à un éloignement de l'organe mobile par rapport à l'organe fixe.

On précisera encore ici que les moyens de déplacement comportent au moins deux billes, dont chacune est en contact permanent avec deux logements respectivement, ces deux logements, qui sont formés en vis-à-vis et qui s'évasent l'un vers l'autre, étant ménagés l'un dans une face de l'organe fixe et l'autre dans une face de l'organe mobile.

Suivant une caractéristique de l'invention, les logements précités présentent une symétrie de révolution et les axes de symétrie de deux logements en vis-à-vis sont confondus dans ladite position de référence.

De préférence, les logements précités auront une forme conique ou analogue.

Suivant encore une autre caractéristique, l'articulation comporte des moyens élastiques interposés entre les organes fixe et mobile.

Plus précisément, les moyens élastiques comprennent une pièce ou masse en matière élastique qui est rendue solidaire de l'organe fixe ainsi que de l'organe mobile par adhérence.

L'invention est en outre caractérisée en ce que la pièce en matière élastique est précontrainte de manière à solliciter l'organe mobile vers la position moyenne de référence.

L'articulation se caractérise de plus en ce que l'un des organes fixe et mobile comporte un premier élément rigide dans lequel lesdits logements sont ménagés, un deuxième élément rigide fixe par rapport à l'organe correspondant, ainsi qu'une autre masse en matière élastique interposée entre ces éléments rigides et adhérant à chacun de ces derniers.

D'autre part, l'invention a également pour objet une suspension, notamment pour une roue arrière de véhicule automobile, la roue étant montée à une extrémité d'un bras tiré dont l'autre extrémité est reliée à la caisse du véhicule par une articulation conforme aux caractéristiques énoncées ci-dessus.

Dans une telle suspension, les moyens de déplacement précités sont agencés de manière que l'extrémité du bras qui est reliée à la caisse du véhicule se rapproche du plan médian de ce dernier, lors des mouvements de la roue.

Par ailleurs, l'articulation de cette suspension comporte une biellette sensiblement transversale dont une extrémité est articulée sur la caisse du véhicule et dont l'autre est articulée sur un support de roue ou à proximité de celui-ci.

Mais d'autres caractéristiques de l'invention ressortiront mieux de la description détaillée donnée uniquement à titre d'exemple, qui suit et se réfère aux dessins annexés, dans lesquels:

La figure 1 est une vue partielle d'une articulation conforme à l'invention, en coupe suivant son axe de rotation.

La figure 2 est une vue de face suivant la flèche II de l'articulation de la figure 1.

La figure 3 est une vue agrandie d'un détail de l'articulation de la figure 1 désigné sur cette figure par la flèche III.

La figure 4 est une vue de dessus partiellement en coupe d'une suspension conforme à l'invention.

En se reportant à la figure 4, on voit que la référence numérique 1 désigne la caisse d'un véhicule automobile quelconque, tandis que la référence numérique 2 désigne une roue de ce véhicule. Ici, la roue 2 est une roue arrière qui est montée, par l'intermédiaire d'un support de roue 202, à l'extrémité libre 222 d'un bras oscillant 220 de type tiré. L'autre extrémité 221 du bras tiré 220 est reliée à la caisse 1 du véhicule par une articulation généralement désignée en 12.

Suivant cet exemple, les parties du véhicule visibles sur les figures et qui sont solidaires de la caisse 1 constitueront un premier organe dit "fixe" et celles qui sont solidaires du bras tiré 220 constitueront un second organe dit "mobile". De fait, l'articulation 12 permet le montage de l'organe mobile comprenant le bras 220 à rotation autour d'un axe de pivotement X-X' sensiblement parallèle à l'axe de rotation de la roue 2, sur un organe fixe par rapport à la caisse 1 du véhicule.

Evidemment, l'articulation 12 d'axe X-X' conforme à la présente invention pourra relier divers types d'organes fixe et mobile. Selon l'invention, elle comporte des moyens de déplacement 30 agencés entre le premier et le second organe de façon que tout mouvement de l'organe mobile en rotation autour de l'axe X-X' et/ou perpendiculairement à celui-ci, entraîne un déplacement de l'organe mobile suivant la direction de cet axe X-X', et dans un sens toujours identique à partir d'une position moyenne de référence représentée sur les figures.

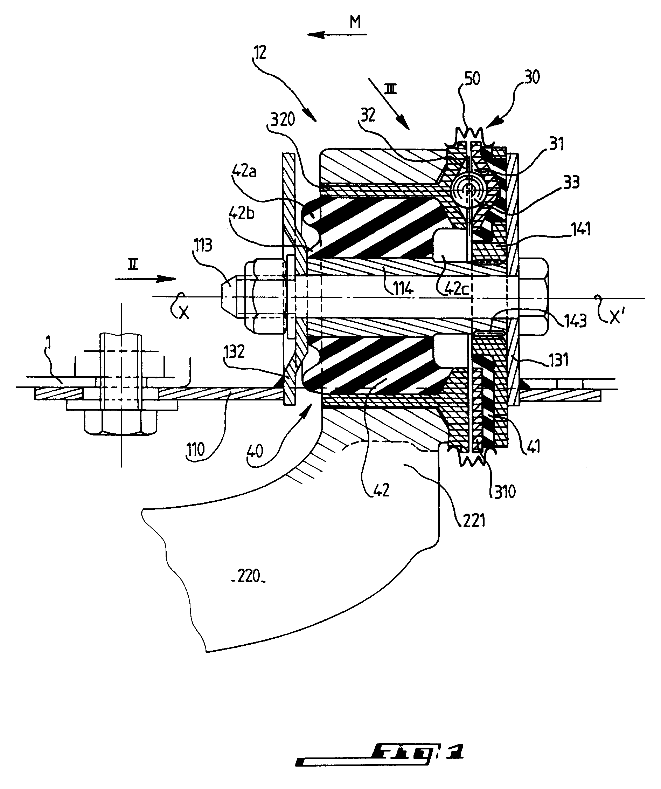

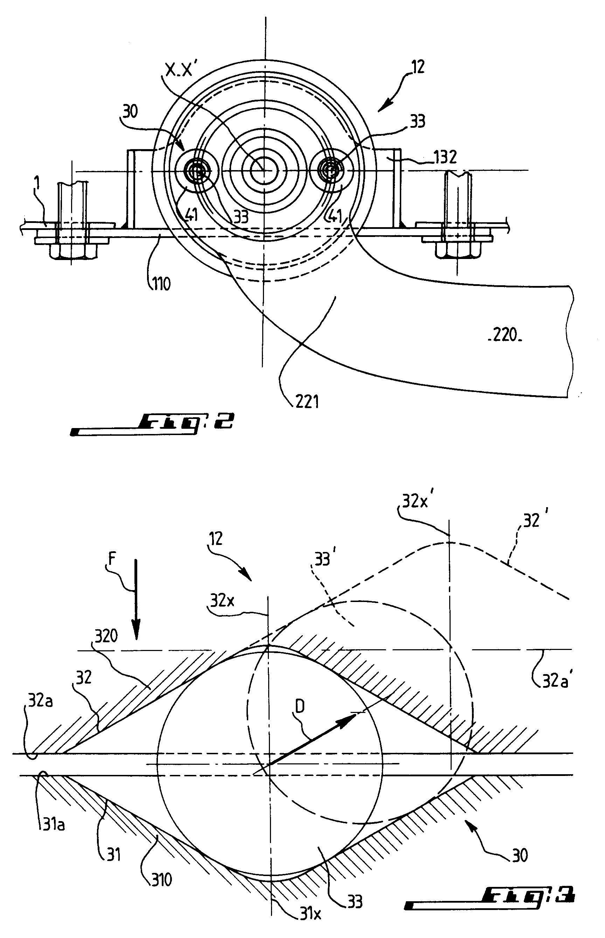

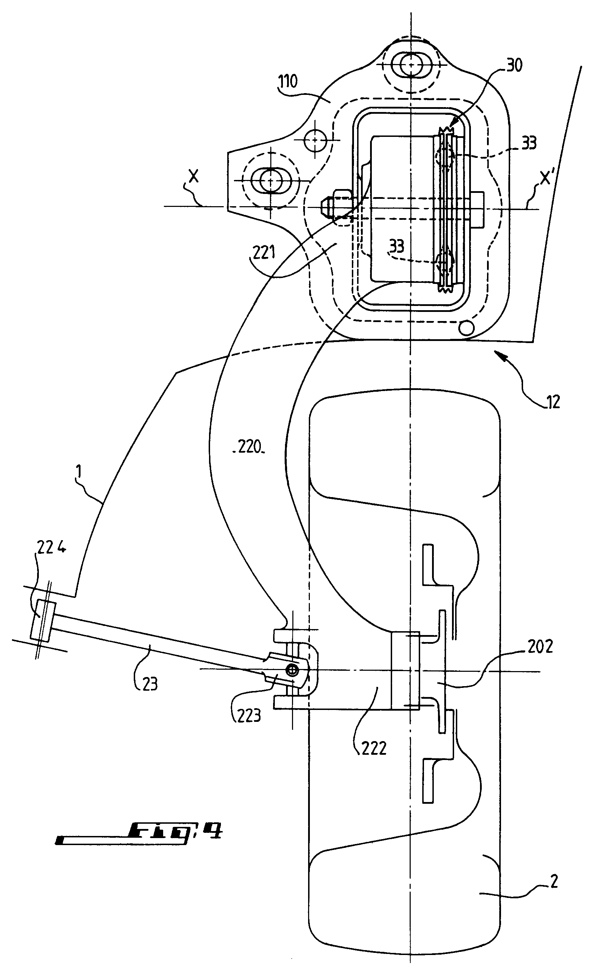

Comme illustré sur les figures 1 et 2, les moyens de déplacement 30 comprennent au moins deux billes rigides 33, dont chacune est en contact permanent avec deux logements respectivement désignés en 31 et 32. Autrement dit, chaque bille 33 est enserrée entre un logement 31 et un logement 32.

Chacun des logements 31 est ménagé dans une face d'extrémité 31a (figure 3) d'un élément ou disque rigide 310 faisant partie et donc solidaire de l'organe fixe. Chaque logement 32 est ménagé en vis-à-vis d'un logement 31 correspondant, dans une face d'extrémité 32a d'une chemise rigide 320 de l'organe fixé au bras 220. Les logements 31 et 32 sont de forme évasée vers les faces correspondantes 31a et 32a, suivant leurs axes respectifs 31x et 32x. De plus, les axes 31x et 32x, qui sont confondus quand l'articulation est en position moyenne de référence, constituent des axes de symétrie pour les logements 31, 32 correspondants, dont la forme est généralement conique.

On voit bien sur la figure 1 que l'articulation comporte des moyens élastiques 40 qui sont interposés entre l'organe mobile et l'organe fixe. Plus précisément, on remarque que l'organe fixe est constitué par une platine 110 vissée sur la caisse 1 et sur laquelle un arbre fixe 113 est monté suivant l'axe X-X', entre deux entretoises 131, 132. Une douille cylindrique 114 montée sur l'arbre fixe 113 s'étend de part en part de l'articulation 12, avec chacune de ses extrémités en appui contre l'une des entretoises 131 ou 132. Un flasque 141 est fixé sur la douille 114 par l'intermédiaire de dentelures axiales 143, de façon à venir en appui contre la face de l'entretoise 131 disposée en regard de l'entretoise 132.

Une masse 41 de matière élastique telle que du caoutchouc, qui fait partie des moyens élastiques 40 et qui a généralement la forme d'une bague, est fixée par adhérence ou "adhérisée" d'une part au disque rigide 310 qui comporte les logements 31 et d'autre part au flasque 141. Cette bague 41 permet d'absorber les vibrations de l'articulation 12, et de rendre son fonctionnement plus silencieux.

On remarque sur la figure 1 que des orifices sont formés dans la partie radiale du flasque 141 pour que des tenons cylindriques en matière élastique venus de matière avec la bague 41 puissent s'étendre à travers cette partie, jusqu'à l'entretoise 131. Ces tenons qui sont formés en regard des logements 31 permettent non seulement de rendre l'articulation 12 plus compacte suivant l'axe X-X', mais aussi d'améliorer la transmission des efforts dans cette articulation. Evidemment, le flasque 141 et le disque 131 peuvent former une seule pièce sans moyens élastiques, si l'articulation 12 n'a pas besoin d'être particulièrement silencieuse.

Au vu de la figure 1, on comprend que la chemise 320 est logée et fixée dans un alésage du bras 220 qui est traversé par l'arbre fixe 113, suivant l'axe X-X'. La partie du bras tiré 220 qui comporte cet alésage et la chemise 320 de l'articulation constituent donc l'organe mobile de cette dernière.

Par ailleurs, les moyens élastiques 40 comprennent aussi une masse ou pièce de forme approximativement cylindrique qui est adhérisée d'une part à la paroi extérieure de la douille 114 de l'organe fixe et d'autre part à un alésage cylindrique défini par la paroi interne de la chemise 320. La pièce 42 est également en matière élastique telle que du caoutchouc et son extrémité la plus proche de l'entretoise 131 vient en appui contre et est adhérisée à une surface inclinée de la chemise 320 qui fait saillie de l'intérieur de celle-ci, vers l'axe X-X'. A son autre extrémité, la pièce 42 dépasse de la chemise 320 en regard de l'entretoise 132, et a la forme d'un bourrelet 42a semi-torique. Une partie centrale 42b de la pièce 42 dépasse aussi de la chemise 320 et vient en appui permanent contre un bossage circulaire de l'entretoise 132. Ce bossage fait également office de butée axiale pour la douille 114. Il convient de noter ici qu'en position moyenne, il existe un jeu de quelques millimètres suivant l'axe X-X', entre l'extrémité du bourrelet 42a et la partie correspondante de l'entretoise 132.

Sur la figure 1, la pièce élastique 42 comporte à proximité de la partie centrale du flasque 141 une découpe cylindrique 42c grâce à laquelle notamment, la pièce 42 présente une élasticité prédéterminée, à la fois suivant et perpendiculairement à l'axe X-X', mais aussi lorsque la douille fixe 114 et la chemise mobile 320 tournent l'une par rapport à l'autre autour de cet axe X-X'.

En outre, la pièce en matière élastique 42 est précontrainte de façon à solliciter axialement (suivant X-X') la chemise 320 de l'organe mobile à l'encontre de l'entretoise 131 de l'organe fixe, c'est-à-dire vers sa position moyenne de référence. Une telle précontrainte permet de maintenir constamment les billes 33 entre leurs logements 31 et 32. La charge de précontrainte qui est orientée suivant le sens de la flèche F sur la figure 3 est choisie avec une valeur permettant de remplacer efficacement un ressort de maintien en position des billes 33.

Sur la figure 1, on remarque qu'un soufflet élastique 50, fixé à la chemise 320 et au flasque 141, protège l'espace de l'articulation 12 situé entre les faces 32a et 31a.

En se reportant à nouveau à la figure 4, on remarque qu'une biellette 23 est montée à peu près transversalement entre la caisse 1 et une articulation 223 située à proximité du support de roue 202. L'articulation 223 relie de manière rotulante une extrémité de la biellette 23, et l'autre extrémité de celle-ci est articulée sur la caisse 1 par une articulation pivotante 224.

Comme illustré sur la figure 3, lorsque la chemise mobile 320 de l'articulation 12 est déplacée dans un sens donné à rotation autour de l'axe X-X' et/ou perpendiculairement à cet axe, les billes 33 roulent contre les logements 31, 32 suivant la direction de la flèche D ou symétriquement par rapport à l'axe 31x, vers la position 33' représentée en pointillés. Dans cette position, le logement 32, l'axe 32x et la face 32a de la chemise 320, peuvent se déplacer respectivement jusqu'aux positions en pointillés désignées en 32', 32x et 32a.

Le mouvement des billes 33 et des logements 32 selon la flèche D (ou symétriquement) provoque un déplacement de la chemise 320 et du bras 220 qui constituent ensemble l'organe mobile, tel que celui-ci s'éloigne de l'organe fixe toujours suivant la flèche M (figure 1). On peut donc dire que le sens du déplacement M de l'organe mobile suivant la direction X-X', à partir de la position moyenne de référence, est toujours le même.

Dans la suspension de la figure 4, l'articulation 12 est agencée de manière que le déplacement M expliqué plus haut de l'organe mobile provoque un rapprochement de l'extrémité 221 du bras tiré 220, vers le plan médian du véhicule équipé d'une telle articulation. En d'autres termes, lorsque la roue 2 agit sur le bras oscillant 220, l'articulation 12 agit de façon à déplacer le bras 220 vers l'intérieur de la caisse 1, c'est-à-dire vers la gauche sur la figure 4. De ce fait, puisque la suspension visible sur la figure 4 comporte la biellette 23, le déplacement M de l'organe mobile de l'articulation 12 provoque un pincement du train dont fait partie la roue 2.

Evidemment, l'invention n'est nullement limitée au mode de réalisation qui vient d'être décrit. Ainsi, dans le cas d'une variante, les parties fixe et mobile décrites plus haut peuvent être inversées. De plus, les logements 31 et 32 n'ont pas forcément une forme conique, et selon la loi de déplacement que l'on veut obtenir pour l'organe mobile, il est possible que ces logements aient des génératrices concaves ou convexes, ces génératrices étant déterminées suivant les effets recherchés.

On a donc obtenu conformément à l'invention une articulation ainsi qu'une suspension équipée de cette articulation qui permettent d'obtenir une correction d'épure telle que le déplacement de l'organe mobile par rapport à l'organe fixe est piloté. Un autre avantage de l'articulation conforme à l'invention est qu'elle peut s'intégrer facilement dans divers mécanismes, et que son entretien ne nécessite aucune intervention.

Enfin, on précisera que les équivalents des moyens techniques qui viennent d'être décrits ainsi que leurs combinaisons sont comprises dans l'invention, si celles-ci sont effectuées suivant son esprit.

## Revendications

1. Articulation entre un premier organe (1) dit fixe et un second organe (220) mobile en rotation par rapport au premier organe autour d'un axe (X-X'), comportant des moyens de déplacement (30) agencés entre le premier (1) et le second (220) organe de façon que tout mouvement de ce dernier en rotation autour dudit axe (X-X') entraîne un déplacement du second organe (220) suivant ledit axe, caractérisée en ce que tout mouvement du second organe (220) perpendiculairement audit axe (X-X') entraîne aussi un déplacement (M) de l'organe mobile (220) suivant ledit axe, et en ce que le sens desdits déplacements, à partir d'une position moyenne de référence, est toujours le même.

2. Articulation selon la revendication 1, caractérisée en ce que les moyens de déplacement (30) sont agencés pour que le sens (M) de déplacement précité corresponde à un éloignement de l'organe mobile (220, 320) par rapport à l'organe fixe.

3. Articulation selon la revendication 2, caractérisée en ce que les moyens de déplacement (30) comportent au moins deux billes (33), dont chacune est en contact permanent avec deux logements (31, 32) respectivement, ces deux logements, qui sont formés en vis-à-vis et qui s'évasent l'un vers l'autre, étant ménagés l'un (31) dans une face (31a) de l'organe fixe et l'autre (32) dans une face (32a) de l'organe mobile (220, 320).

4. Articulation selon la revendication 3, caractérisée en ce que les logements (31, 32) précités présentent une symétrie de révolution, et les axes de symétrie (31x, 32x) de deux logements en vis-à-vis sont confondus dans ladite position de référence.

5. Articulation selon la revendication 4, caractérisée en ce que les logements (31, 32) précités ont une forme conique ou analogue.

6. Articulation selon l'une des revendications 1 à 5, caractérisée en ce qu'elle comporte des moyens élastiques (40) interposés entre les organes fixe et mobile.

7. Articulation selon la revendication 6, caractérisée en ce que les moyens élastiques (40) comprennent une pièce ou masse (42) en matière élastique qui est rendue solidaire de l'organe fixe ainsi que de l'organe mobile (220, 320) par adhérence.

8. Articulation selon la revendication 7, caractérisée en ce que la pièce (42) en matière élastique est précontrainte de manière à solliciter l'organe mobile (320, 220) vers la position moyenne de référence.

9. Articulation selon l'une des revendications 6 à 8, caractérisée en ce que l'un des organes fixe et mobile comporte un premier élément rigide (310) dans lequel lesdits logements (31) sont ménagés, un deuxième élément rigide (141) fixe par rapport à l'organe correspondant, ainsi qu'une autre masse en matière élastique (41) interposée entre ces éléments rigides (310, 141) et adhérant à chacun de ces derniers.

10. Suspension, notamment pour roue arrière (2) de véhicule automobile, la roue (2) étant montée à une extrémité (222) d'un bras tiré (220) dont l'autre extrémité (221) est reliée à la caisse (1) du véhicule par une articulation (12), caractérisée en ce que cette articulation (12) est conforme à l'une quelconque des revendications précédentes.

11. Suspension selon la revendication 10, caractérisée en ce que les moyens de déplacement (31, 32, 33) précités sont agencés de manière que l'extrémité (221) du bras (220) qui est relié à la caisse (1) du véhicule se rapproche du plan médian de ce dernier lors des mouvements de la roue (2).

12. Suspension selon la revendication 11, caractérisée en ce qu'elle comporte en outre une biellette (23) sensiblement transversale dont une extrémité (224) est articulée sur la caisse (1) du véhicule et dont l'autre (223) est articulée sur le support (202) de roue (2) ou à proximité de celui-ci.

## Claims

1. Pivotal connection between a first so-called stationary member (1) and a second member (220) movable for rotation with respect to the first member about an axis (X-X'), comprising displacement means (30) arranged between the first member (1) and the second member (220) so that any rotary movement of the later about the said axis (X-X') results in a displacement of the second member (220) along the said axis, characterized in that any movement of the second member (220) in perpendicular relation to the said axis (X-X') also results in a displacement (M) of the movable member (220) along the said axis and in that the direction of the said displacements from a medial reference position is always the same.

2. Pivotal connection according to claim 1, characterized in that the displacement means (30) are arranged in order that the direction (M) of the aforesaid displacement corresponds to a moving away of the movable member (220, 320) with respect to the stationary member.

3. Pivotal connection according to claim 2, characterized in that the displacement means (30) comprise at least two balls (33) each one of which is in permanent contact with two recesses (31, 32), respectively, these two recesses, which are formed in confronting relationship and which are flared towards each other, being formed the one (31) in one face (31a) of the stationary member and the other one (32) in one face (32a) of the movable member (220, 320).

4. Pivotal connection according to claim 3, characterized in that the aforesaid recesses (31, 32) exhibit a symmetry of revolution and the axes of symmetry (31x, 32x) of both confronting recesses are co-inciding in the said reference position.

5. Pivotal connection according to claim 4, characterized in that the aforesaid recesses (31, 32) have a conical or like shape.

6. Pivotal connection according to one of claims 1 to 5, characterized in that it comprises elastic means (40) interposed between the stationary and movable members.

7. Pivotal connection according to claim 6, characterized in that the elastic means (40) comprises a piece or body (42) of elastic material which is made fast to the stationary member as well as to the movable member (220, 320) through adherence.

8. Pivotal connection according to claim 7, characterized in that the piece (42) of elastic material is prestressed so as to urge the movable member (320, 220) towards the medial reference position .

9. Pivotal connection according to one of claims 6 to 8, characterized in that one of the stationary and movable members comprises a first rigid element (310) in which the said recesses (31) are provided, a second rigid element (51) stationary with respect to the corresponding member as well as another body of elastic material (41) interposed between these rigid elements (310, 141) and adhering to each one of the latter.

10. Suspension in particular for a rear wheel (2) of an automotive vehicle, the wheel (2) being mounted at one end (222) of a drawn arm (220) the other end (221) of which is connected to the car body (1) of the vehicle by a pivotal connection (12), characterized in that this pivotal connection (12) is according to any one of the foregoing claims.

11. Suspension according to claim 10, characterized in that the aforesaid displacement means (31, 32, 33) are arranged so that that end (221) of the arm (220) which is connected to the car body (1) of the vehicle moves towards the medial plane of the latter during the motions of the wheel (2).

12. Suspension according to claim 11, characterized in that it moreover comprises a substantially transverse connecting rod (23) one end (224) of which is pivotally connected to the car body (1) of the vehicle and the other end (223) of which is pivotally connected to the support (202) of the wheel (2) or in the vicinity thereof.

## Patentansprüche

1. Gelenk zwischen einem ersten sogenannten ortsfesten Glied (1) und einem in bezug auf das erste um eine Achse (X-X') herum drehbeweglichen zweiten Glied (220), mit zwischen dem ersten und dem zweiten Glied (1) und (220) angeordneten Verschiebungsmitteln (30), sodass jede Drehbewegung dieses zweiten Gliedes um die besagte Achse (X-X') herum eine Verschiebung des zweiten Gliedes (220) entlang der besaten Achse zur Folge hat, dadurch gekennzeichnet, dass jede senkrecht zur besagten Achse (X-X') gerichtete Bewegung des zweiten Gliedes (220) auch eine Verschiebung (M) des beweglichen Gliedes (220) entlang der besagten Achse zur Folge hat und dass die Richtung der besagten Verschiebungen von einer mittleren Bezugsstellung ab immer dieselbe ist.

2. Gelenk nach Anspruch 1, dadurch gekennzeichnet, dass die Verschiebungsmittel (30) derart angeordnet sind, dass die Richtung (M) der vorgenannten Verschiebung einem Wegrücken des beweglichen Gliedes (220, 320) in bezug auf das ortsfeste Glied entspricht.

3. Gelenk nach Anspruch 2, dadurch gekennzeichnet, dass die Verschiebungsmittel (30) wenigstens zwei Kugeln (33) aufweisen, deren jede in ständiger Berührung jeweils mit zwei Aufnahmen (31, 32) ist, wobei diese beiden Aufnahmen, die einandergegenüber gebildet sind und die sich zueinander hin erweitern, die eine (31) in einer Fläche (31a) des ortsfesten Gliedes und die andere (32) in einer Fläche (32a) des beweglichen Gliedes (220, 320) gebildet sind.

4. Gelenk nach Anspruch 3, dadurch gekennzeichnet, dass die vorgenannten Aufnahmen (31, 32) rotationssymmetrisch sind und die Symmetrieachsen (31x, 32x) der beiden einander gegenüberliegenden Aufnahmen in der besagten Bezugsstellung zusammenfallen.

5. Gelenk nach Anspruch 4, dadurch gekennzeichnet, dass die vorgenannten Aufnahmen (31, 32) eine kegelförmige Gestalt oder dergleichen haben.

6. Gelenk nach einem der Ansprüche 1 bis 5, dadurch gekennzeichnet, dass es zwischen dem ortsfesten und dem beweglichen Glied gefügte elastische Mittel (40) aufweist.

7. Gelenk nach Anspruch 6, dadurch gekennzeichnet, dass die elastischen Mittel (40) ein Werkstück bzw. eine Masse (42) aus elastischem Werkstoff umfassen, das bzw. die mit dem ortsfesten Glied sowie mit dem beweglichen Glied (220, 320) durch Haftvermögen fest verbunden ist.

8. Gelenk nach Anspruch 7, dadurch gekennzeichnet, dass das Werkstück (42) aus elastischem Werkstoff derart vorgespannt ist, um das bewegliche Glied (320, 220) zu seiner mittleren Bezugsstellung hin rückstellend zu beaufschlagen.

9. Gelenk nach einem der Ansprüche 6 bis 8, dadurch gekennzeichnet, dass das eine des ortsfesten und beweglichen Gliedes ein erstes steifes Element (310) in welchem die besagten Aufnahmen (31) gebildet sind, ein zweites gegenüber dem entsprechenden Glied ortsfestes steifes Element (141) sowie eine andere zwischen diesen steifen Elementen (310, 141) gefügte und an jedes dieser letzteren anhaftende Masse aus elastischem Werkstoff (41) aufweist.

10. Aufhängung insbesondere für das Hinterrad (2) eines Kraftfahrzeuges, wobei das Rad (2) an einem Ende (222) eines gezogenen Armes (220), dessen anderes Ende (221) mit dem Kasten (1) des Fahrzeuges durch ein Gelenk (12) verbunden ist, angeordnet ist, dadurch gekennzeichnet, dass dieses Gelenk (12) irgendeinem der vorangehenden Ansprüche entspricht.

11. Aufhängung nach Anspruch 10, dadurch gekennzeichnet, dass die vorgenannten Verschiebungsmittel (31, 32, 33) derart angeordnet sind, dass dasjenige Ende (221) des Armes (220), das mit dem Kasten (1) des Fahrzeuges verbunden ist, sich der Mittelebene dieses letzteren während der Bewegungen des Rades (2) nähert.

12. Aufhängung gemäss Anspruch 11, dadurch gekennzeichnet, dass sie ausserdem einen etwa quergerichteten Lenker (23) aufweist, dessen eine Ende (224) an dem Kasten (1) des Fahrzeuges angelenkt ist und dessen andere Ende (223) an dem Träger (202) des Rades (2) oder in der Nähe desselben angelenkt ist.
